# EUROPÄISCHE PATENTSCHRIFT

(11) **EP 2 228 172 B1**
(45) Veröffentlichungstag und Bekanntmachung des Hinweises auf die Patenterteilung: **09.05.2012**
(21) Anmeldenummer: 10002400.9
(22) Anmeldetag: 09.03.2010
(51) Int. Cl.: B23Q 13/00, B27B 17/00

(54) **Kettenschutz für Motorkettensägen**
Chain protector for motorised chain saws
Protection de chaîne pour scies à chaînes motorisées

(30) Priorität: 11.03.2009 DE 102009012291
(43) Veröffentlichungstag der Anmeldung: 15.09.2010
(73) Patentinhaber: Andreas Stihl AG & Co. KG, 71336 Waiblingen (DE)
(72) Erfinder: Lank, Jonas, 71404 Korb (DE); Stahl, Peter, 71570 Oppenweiler (DE); Zimmermann, Helmut, 73663 Berglen (DE); Uhl, Klaus-Martin, 73207 Plochingen (DE); Hollmeier, Friedrich, 73635 Rudersberg (DE)
(74) Vertreter: Wasmuth, Rolf

(56) Entgegenhaltungen:
- US-A- 3 344 818

## Beschreibung

Die Erfindung betrifft einen Kettenschutz für Motorkettensägen und Tragvorrichtung für diesen der im Oberbegriff des Anspruchs 1 angegebenen Gattung.

In verschiedenen Arbeitsbereichen, in denen Motorkettensägen eingesetzt werden, ist es erforderlich, dass bei nicht benutzter Säge Bedienungspersonen während ihrer Bewegungen vor Verletzungen durch die Sägekette geschützt werden. Um Sägeketten während des Stillstandes der Maschine abzudecken, ist bereits aus der US 3,344,818 ein Kettenschutz bekannt. Insbesondere bei der Handhabung von TopHandle-Sägen, die während des Bewegens in Baumkronen bzw. beim Seilklettern eingesetzt werden, ist es wichtig, dass die Bedienungsperson nicht mit den scharfen Schneidgliedern der Sägekette in Berührung kommt und sich verletzt.

Der vorliegenden Erfindung liegt die Aufgabe zu Grunde, einen Kettenschutz für Motorkettensägen zu schaffen, der für die Bedienungsperson einfacher zu handhaben und so ausgestaltet ist, dass der Kettenschutz im von der Motorkettensäge abgenommenen Zustand verliersicher befestigbar ist.

Diese Aufgabe wird durch einen Kettenschutz und Tragvorrichtung für diesen mit den Merkmalen des Anspruchs 1 gelöst und durch ein Verfahren mit den Merkmalen des Anspruchs 11.

Als Tragvorrichtung kommen beispielsweise ein Bekleidungsstück der Bedienungsperson der Motorkettensäge, ein Traggurt oder ein Klettergurt der Bedienungsperson, ein Seil oder ein Karabiner in Betracht.

Gemäß einer vorteilhaften Ausgestaltung der Erfindung umfasst die Vorrichtung mindestens einen Haken. Dabei ist es zweckmäßig, dass an dem Haken ein Vorsprung angeformt ist, so dass sich ein in den Haken eingebrachtes Seil oder ein Karabiner nicht aus dem Haken lösen kann. Eine alternative Ausgestaltung der Vorrichtung besteht darin, dass diese mindestens eine Öse oder geschlossenen Bügel umfasst.

Das Gehäuse des Kettenschutzes besteht vorzugsweise aus einem Kunststoffmaterial. Weiterhin ist es zweckmäßig, dass die Vorrichtung aus dem gleichen Kunststoffmaterial besteht und einstückig mit dem Gehäuse ausgeführt ist. Dadurch ist die Herstellung des Kettenschutzes vereinfacht. Vorzugsweise ist der Kettenschutz ein Blasformteil, bei dem auf einfache Weise die unterschiedlichen gewünschten Konturen erzeugbar sind.

Gemäß einer weiteren Ausgestaltung der Erfindung sind vor dem hinteren Ende des Gehäuses an den Seitenwänden nach innen gerichtete Wölbungen vorgesehen, die einen Klemmabschnitt bilden. Dadurch wird der Klemmschutz bereits auf dem Sägeschwert gehalten, wenn er erst ein Stück weit aufgeschoben ist, was weiterhin zum sicheren Handling des Kettenschutzes beiträgt.

Außerdem ist es von Vorteil, dass an den Seitenwänden am hinteren Ende des Gehäuses divergierende Wände angeordnet sind, die eine trichterförmige Öffnung bilden. Auf diese Weise wird bei vollständig auf das Sägeschwert aufgeschobenem Kettenschutz auch der Krallenanschlag an der Motorsäge durch den Kettenschutz mit abgedeckt und die trichterförmige Ausbildung der Öffnung ermöglicht ein einfaches und sicheres Aufziehen.

In weiterer Ausgestaltung ist es zweckmäßig, dass die Seitenwände mindestens zwei Abschnitte umfassen, die in verschiedenen Ebenen angeordnet sind und zwischen denen ein Absatz vorhanden ist und durch die Abschnitte der Abstand zwischen den Seitenwänden unterschiedlich ist, wobei der Abstand am äußeren Umfang des Kettenschutzes größer ist als in der Mitte. Dadurch ist gewährleistet, dass ein ausreichender Platz im Bereich der Sägekette und den Schneidgliedern gegeben ist, wohingegen im Bereich des Schwertes der taillierte Abschnitt dafür sorgt, dass die Schwenkbewegung aus der Längsachse heraus begrenzt ist. Ferner wird durch eine solche Gestaltung ein unnötiger Verschleiß des Kettenschutzes vermieden. Um im montierten Zustand des Kettenschutzes auf dem Sägeschwert den Kettenschutz gegen ein unbeabsichtigtes Verschieben zu sichern, ist vorzugsweise ein Vorsprung oder Haken zum formschlüssigen Eingriff an einem Kettenraddeckel der Motorkettensäge vorgesehen.

Neben den bereits erwähnten Ausgestaltungen der Vorrichtung in Form von Haken, Ösen oder Bügeln kann die Vorrichtung auch durch eine Schlaufe oder ein Klettband gebildet sein. Selbstverständlich ist es auch möglich, eine Kombination der verschiedenen Maßnahmen vorzusehen, das heißt zusätzlich zu Haken oder Ösen auch ein Klettband.

In weiterer Ausgestaltung der Erfindung ist vorzugsweise an dem Gehäuse mindestens eine entriegelbare Sperrklinke vorgesehen, die zwischen Schneidzähne der Sägekette greifen kann. Gemäß einer weiteren Ausführungsform des Kettenschutzes umfasst das Gehäuse mindestens zwei teleskopartig verschiebbare Gehäuseteile. Dabei ist zweckmäßigerweise an dem Gehäuseteil, das in das andere Gehäuseteil schiebbar ist, der Mechanismus mit Sperrklinken vorgesehen.

Ausführungsbeispiele der Erfindung sind nachstehend anhand der Zeichnung näher erläutert. In der Zeichnung zeigt:
- Fig. 1: eine Motorkettensäge mit einem Kettenschutz,
- Fig. 2: eine perspektivische Darstellung des Kettenschutzes,
- Fig. 3: eine Seitenansicht des Kettenschutzes,
- Fig. 4: eine Ansicht in Richtung des Pfeils IV in Fig. 3,
- Fig. 5: eine Ansicht in Richtung des Pfeils V in Fig. 3,
- Fig. 6: einen Schnitt entlang der Linie VI-VI in Fig. 3,
- Fig. 7: eine Ausführungsvariante des Kettenschutzes,
- Fig. 8: einen teleskopartig verstellbaren Kettenschutz,
- Fig. 9: einen als Bekleidungsstück einer Bedienungsperson dienender Arbeitsanzug mit an diesem angehängten Ket- tenschutz,
- Fig. 10: einen an einem Seil hängenden Kettenschutz,
- Fig. 11: einen an einem Karabiner eingehängten Kettenschutz.

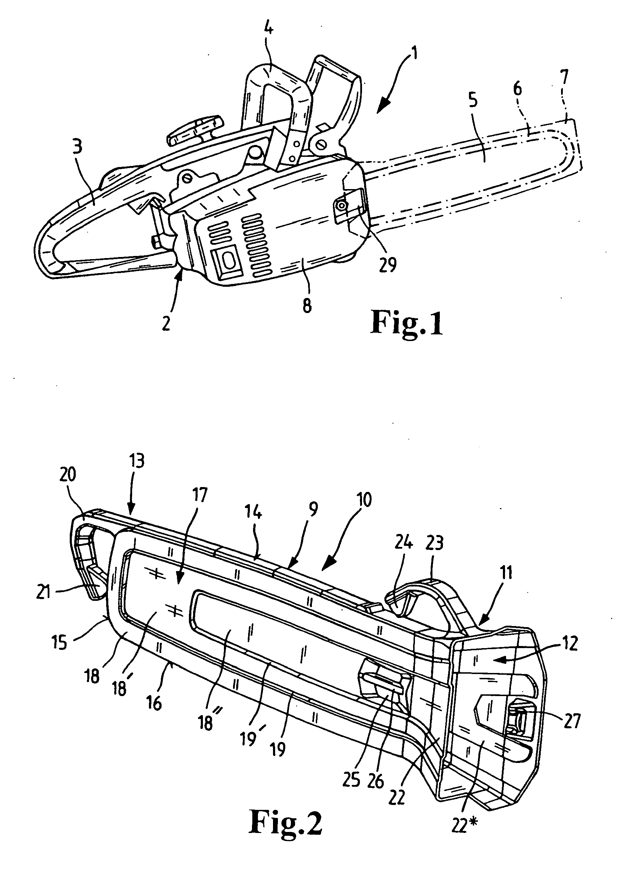

Die Fig. 1 zeigt in schematischer Darstellung eine Motorkettensäge 1 mit einem Gehäuse 2, in dem der Antriebsmotor angeordnet ist. Das Gehäuse 2 ist mit Handgriffen 3 und 4 zum Führen der Motorkettensäge 1 versehen. Die Motorkettensäge 1 verfügt über ein Sägeschwert 5, über das eine Sägekette 6 läuft. Wenn die Motorkettensäge 1 nicht in Betrieb ist, so kann das Sägeschwert 5 bzw. die Sägekette 6 mittels eines Kettenschutzes 7 abgedeckt werden, um Verletzungen der Bedienungsperson zu vermeiden. An dem Gehäuse 2 ist seitlich ein Kettenraddeckel 8 angeordnet, der das Antriebsritzel und den Bereich der darüber laufenden Sägekette abdeckt. An dem Kettenraddeckel 8 ist eine entsprechende Öffnung 29 oder eine Aussparung vorgesehen, in die ein später noch näher erläuterter Vorsprung oder Haken eines Kettenschutzes eingreifen kann.

Fig. 2 zeigt einen Kettenschutz 10 in Form eines schmalen Gehäuses 9 in perspektivischer Darstellung. Der Kettenschutz 10 weist an einem hinteren Ende 11 der Längserstreckung des Gehäuses 9 divergierende Wände 22, 22* auf, durch die eine trichterförmige Öffnung 12 gebildet ist, die das Einführen des Sägeschwertes erleichtert und den an dem Gehäuse angeordneten Krallenanschlag mit abdeckt. An einem vorderen Ende 13 seiner Längserstreckung ist der Kettenschutz 10 geschlossen und von diesem vorderen Ende 13 bis zu der trichterförmigen Öffnung 12 erstrecken sich parallel angeordnete Seitenwände 17, die in einem zur Aufnahme des Sägeschwertes mit der Sägekette ausreichenden Abstand zueinander angeordnet und über einen oberen Wandabschnitt 14, einen vorderen Wandabschnitt 15 und einen unteren Wandabschnitt 16 miteinander verbunden sind.

Wie aus Fig. 2 ersichtlich ist, umfasst die Seitenwand 17 Abschnitte 18, 18' und 18" in unterschiedlichen Ebenen, wobei zwischen den Abschnitten 18, 18' und 18" Absätze 19 und 19' gebildet sind. Diese Gestaltung führt nicht nur dazu, dass der Abstand zwischen den Seitenwänden 17 im Bereich der Sägekette etwas größer ist als im dazwischen liegenden Bereich des Sägeschwertes, sondern verleiht den Seitenwänden 17 und somit auch dem Kettenschutz 10 eine größere mechanische Stabilität. Außerdem ist bei einer solchen Formgebung von besonderer Bedeutung, dass der Kettenschutz 10 im aufgeschobenen Zustand einen nur geringen Spalt zulässt, wodurch vermieden wird, dass sich irgendwelche Gegenstände wie beispielsweise Kletterseile dort verfangen können. Der Abstand der Seitenwände 17 zwischen den Abschnitten 18 ist so bemessen, dass im aufgeschobenen Zustand des Kettenschutzes 10 die Sägekette nicht seitlich an den Abschnitten 18 anliegt, und die Abschnitte 18' haben eine Kontur, dass diese bei aufgeschobenem Kettenschutz 10 nicht im Bereich der Sägekette liegen und auf diese Weise ein unnötiger Verschleiß des Kettenschutzes vermieden wird.

Am vorderen Ende 13 des Kettenschutzes 10 ist am Wandabschnitt 15 ein Haken 20 angeformt, der in einem Bogen verläuft und einen auf den vorderen Wandabschnitt 15 gerichteten Vorsprung aufweist. An der Oberseite des Kettenschutzes 10 ist ebenfalls ein Haken 23 angeformt, der von der Oberseite der divergierenden Wände 22, 22* ausgehend sich bogenförmig nach oben, vorne und zum oberen Wandabschnitt 14 erstreckt, wobei ein zu letzterem gerichteter Vorsprung 24 angeformt ist. Die Haken 20 und 23 dienen zum Befestigen des abgenommenen Kettenschutzes 10 an einer Tragvorrichtung, beispielsweise einem Bekleidungsstück einer Bedienungsperson der Kettensäge, einem Seil, einem Karabiner oder dergleichen, wobei der Vorsprung 21 bzw. 24 zur Sicherheit der Befestigung beiträgt. Die Haken 20, 23 haben seitlich groß ausgebildete Fasen, um das Einhaken im geschlossenen Bereich zu verbessern, z. B. beim Verrasten des Kettenschutzes an einem Karabiner.

Vor den divergierenden Wänden 22 ist am hinteren Ende 11 in dem Abschnitt 18" jeder Seitenwand 17 eine nach innen gerichtete Wölbung 25 vorgesehen, durch die sich ein Klemmabschnitt ergibt, der reibschlüssig auf beiden Seiten des Sägeschwertes anliegt. Die nach innen gerichtete Wölbung 25 kann mittels eines angeformten Stegs 26 versteift sein. An der Wand 22* ist ein in die trichterförmige Öffnung 12 gerichteter Vorsprung 27 vorgesehen, der dazu dient, bei vollständig auf das Sägeschwert aufgeschobenem Kettenschutz 10 hinter einer Kante an dem Kettenraddeckel einzurasten und in die entsprechende Öffnung 29 in Fig. 1 einzugreifen. Der vorstehend beschriebene und in Fig. 2 dargestellte Kettenschutz 10 ist vorzugsweise einstückig als Blasformteil hergestellt.

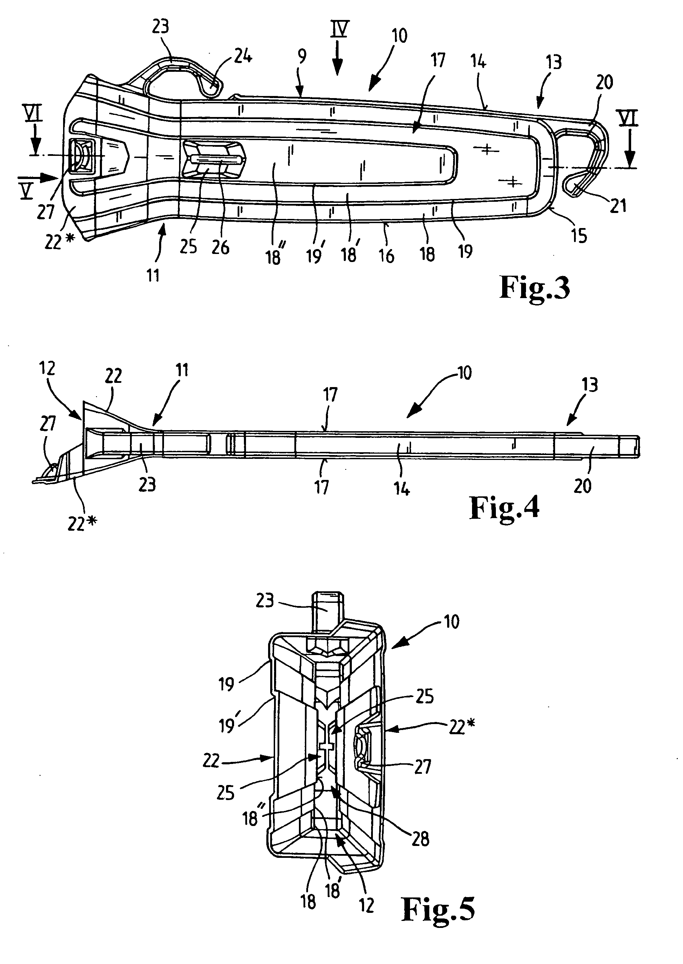

Die Fig. 3 zeigt eine Seitenansicht des Kettenschutzes 10, das heißt eine Ansicht auf die andere Seitenwand 17, die in Fig. 2 auf der abgewandten Seite befindlich ist und an die sich die divergierende Wand 22* anschließt. Diese Seitenwand 17 ist spiegelbildlich exakt so ausgestaltet wie die Seitenwand auf der anderen Seite, also mit gleichen Abschnitten 18, 18', 18" und Absätzen 19, 19'. Ebenso sind die Wölbungen 25 und der Steg 26 vorhanden. Es ist ersichtlich, dass der Vorsprung 21 zum vorderen Wandabschnitt 15 und der Vorsprung 24 zum oberen Wandabschnitt einen gewissen Abstand aufweist, wobei durch elastische Verformung des Hakens 20 bzw. 23 dieser Abstand vergrößert werden kann, um ein Befestigungsmittel wie beispielsweise Seil oder Karabiner anzubringen oder zu lösen. Im Übrigen stimmen die Bezugszeichen für gleiche Teile mit denjenigen der Fig. 2 überein.

In Fig. 4 ist eine Ansicht des Kettenschutzes 10 in Richtung des Pfeils IV in Fig. 3 gezeigt. Es ergibt sich daraus, dass die Seitenwände 17 parallel zueinander verlaufen und über den oberen Wandabschnitt 14 miteinander verbunden sind, wobei an dem vorderen Ende 13 der Haken 20 angeformt ist. Im Bereich des hinteren Endes 11 befindet sich der Haken 23 und es sind dort an den Seitenwänden 17 die divergierenden Wände 22, 22* angeformt, die die trichterförmige Öffnung 12 bilden, wobei an der Wand 22* der Vorsprung 27 erkennbar ist. Die Kontur der Öffnung 12 wurde so gewählt, um einen optimalen Abschluss zur Motorkettensäge zu gewährleisten.

Die Fig. 5 zeigt eine Ansicht des Kettenschutzes 10 in Richtung des Pfeils V in Fig. 3. Daraus ist ersichtlich, dass die Seitenwände 17 die nach innen über Absätze 19, 19' abgestuften Abschnitte 18, 18', 18" aufweisen. Dadurch ergibt sich ein taillierter Abschnitt 28, der bereits in der trichterförmigen Öffnung 12 bzw. an den divergierenden Wänden 22, 22* seinen Anfang nimmt, so dass bereits nach relativ kurzem Einsteckweg eine Schwenkbewegung aus der Längsachse vermieden wird. Außerdem zeigt Fig. 5 die nach innen gerichteten Wölbungen 25, deren Abstand zueinander geringer ist als die Dicke des Sägeschwertes, so dass auf jeden Fall ein Reibschluss zwischen Kettenschutz 10 und Sägeschwert gegeben ist, so dass der Kettenschutz 10 nicht vom Sägeschwert rutscht, selbst wenn dieser erst partiell aufgeschoben ist. Da der Kettenschutz 10 als Blasformteil hergestellt ist, sind auch die in Fig. 2 bis 4 dargestellten Haken 20, 23 hohl und aus diesem Grund elastisch, um eine temporäre Verformung zum Einhängen an einer Schlaufe am Bekleidungsstück der Bedienungsperson, an einem Seil oder Karabiner zu ermöglichen.

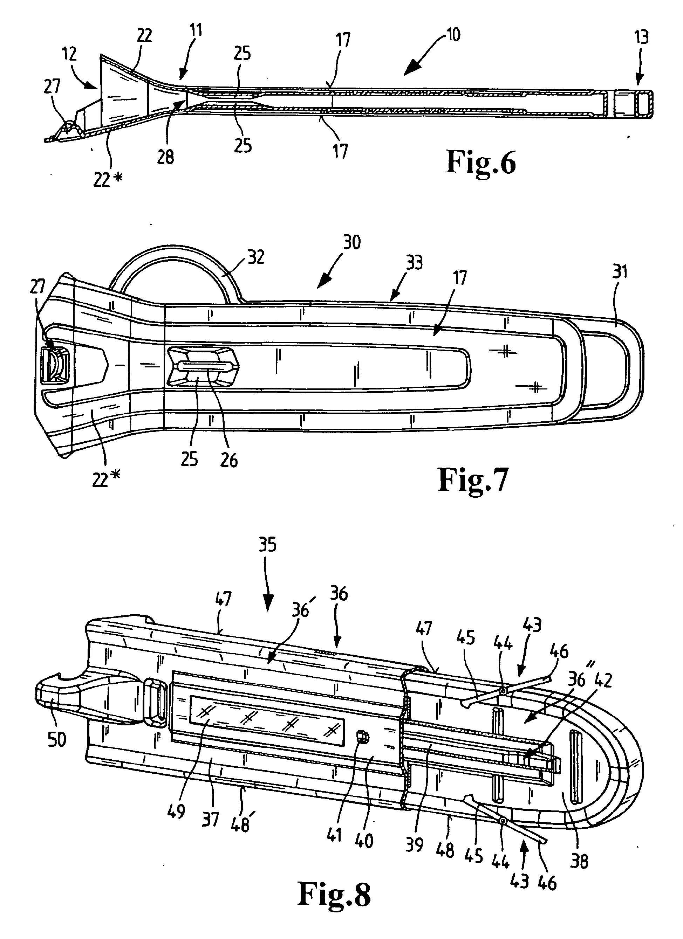

Fig. 6 zeigt einen Schnitt entlang der Line VI-VI in Fig. 3. Am auf der linken Seite hinteren Ende 11 befindet sich die von den divergierenden Wänden 22, 22* gebildete trichterförmige Öffnung 12, die in den taillierten Abschnitt 28 übergeht, an den sich dann der Bereich zwischen den nach innen gerichteten Wölbungen 25 anschließt. Die Seitenwände 17 erstrecken sich parallel bis zum vorderen Ende 13, an dem sich der Haken 20 mit dem Vorsprung 21 befindet. An der Wand 22* ist der Vorsprung 27 ausgebildet. Im gezeigten Ausführungsbeispiel ist die trichterförmige Öffnung 12 zwischen Wänden 22, 22* mit gleichem Öffnungswinkel gebildet. Selbstverständlich sind auch unsymmetrische Anordnungen möglich, wobei zu beachten ist, dass eine gute Abdeckung der Kralle gegeben ist. Es kann auch vorteilhaft sein, den Kettenschutz auf der Seite des Kettenraddeckels möglichst flach zu gestalten.

Die Fig. 7 zeigt eine Ausführungsvariante eines Kettenschutzes 30, bei dem die Vorrichtung zur Befestigung des Kettenschutzes als Öse bzw. geschlossener Bügel 31, 32 ausgebildet ist. Auch solche Bügel können einstückig mit einem Gehäuse 33 ausgeführt und insbesondere im Blasformverfahren mit diesem hergestellt werden. Die Seitenwände 17 sind ebenso gestaltet wie in Fig. 2 und 3, dies gilt auch für die Öffnung 12. Im Übrigen stimmt die Gestaltung mit derjenigen in den Fig. 2 bis 6 überein. Das Gehäuse 33 des Kettenschutzes 30 bzw. das Gehäuse 9 des Kettenschutzes 10 können am oberen und unteren Wandabschnitt an besonders beanspruchten Stellen verstärkt ausgeführt werden, beispielsweise dort, wo Schneidglieder der Sägekette mit dem Material der Gehäuses in Berührung kommen. Die Verstärkung kann eine Materialverdickung sein oder durch Einlegeteile gebildet werden. Die verstärkte Ausführung des Kettenschutzes kann sowohl radial als auch axial erfolgen, wobei festgelegt werden kann, über welche Länge diese Verstärkung angeordnet sein soll. Die Verstärkung ist auch durch einen 2-Komponenten-Blasprozess denkbar, wobei innen ein verschleißfestes Material vorgesehen ist.

Bei den zuvor beschriebenen Ausführungen des Kettenschutzes 10 und 30 ist es möglich, am oberen und unteren Wandabschnitt des Gehäuses 9, 33 eine oder mehrere Sperrklinken vorzusehen, die in Zwischenräume der Schneidzähne greifen können und von der Bedienungsperson, beispielsweise durch Umfassen des Gehäuses 9, 33 in diesem Bereich entriegelbar sind.

In Fig. 8 ist ein Kettenschutz 35 dargestellt, der ein Gehäuse 36 umfasst, das aus zwei teleskopartig ineinander schiebbaren Gehäuseteilen 36', 36" besteht. Die Gehäuseteile 36', 36" weisen Seitenwände 37, 38 auf, wobei an der Seitenwand 38 eine in Längsrichtung verlaufende Stange 39 angeordnet ist, die mit dem Gehäuseteil 36" bewegt wird und beim Einschieben in einer länglichen Haube 40 der Seitenwand 37 aufgenommen wird. An der Innenseite der Haube 40 ist ein Vorsprung 41 angeformt, der in eine Vertiefung 42 an der Stange 39 eingreift, wenn eine definierte Position des Ineinanderschiebens erreicht ist. Selbstverständlich ist es auch möglich, einen solchen Kettenschutz aus mehr als zwei Gehäuseteilen zu bilden.

An dem Gehäuseteil 36" sind Sperrklinken 43 vorgesehen, die als um eine Schwenkachse 44 schwenkbare zweiarmige Hebel ausgebildet sind. Jeder Hebel besitzt einen innen liegenden Arm 45 mit einer Einrichtung zum Eingreifen in die Zwischenräume zwischen zwei Schneidgliedern einer Sägekette und einen außen liegenden Arm 46, der über die Kontur am oberen und unteren Wandabschnitt 47 und 48 hervorsteht. Beim Ineinanderschieben der Gehäuseteile 36', 36" wird von oberen und unteren Wandabschnitten 47', 48' der jeweils außen liegende Arm zum Gehäuseteil 36" hin gedrückt, wodurch die inneren Arme 45 in Richtung auf die Wandabschnitte 47, 48 verschwenkt werden und der Formschluss mit den Schneidgliedern aufgehoben wird. Damit sind die Sperrklinken 43 in einer Position, die das Abziehen des Kettenschutzes 35 von dem Sägeschwert ermöglicht.

Zusätzlich oder alternativ ist es auch möglich, Sperrklinken an einer anderen Position bezogen auf die Länge des Kettenschutzes vorzusehen. Ebenso kann eine Sicherung des teleskopartigen Kettenschutzes 35 durch eine wegabhängige Klemmung auf der Schiene vorgesehen sein, wobei die Klemmung beim Aufschieben des Kettenschutzes 35 aktiviert wird. Hierzu dienen die Stange 39 und der Vorsprung 41, wobei letzterer durch Druck auf die Stange 39 die Seitenwand 38 gegen das Sägeschwert spannt und eine Entlastung erst erfolgt, wenn der Vorsprung 41 in die Vertiefung 42 ragt. Dann kann der Kettenschutz 35 abgenommen werden.

An der Seitenwand 37 ist die Oberfläche der Haube 40 mit einem Klettband 49 versehen, das als Vorrichtung zum Befestigen des Kettenschutzes 35, beispielsweise an einem Bekleidungsstück der Bedienungsperson, dient. An der Seitenwand 37 des Gehäuseteils 36' ist ein Haken 50 angeordnet, der zum Eingriff in die in Fig. 1 gezeigte Öffnung 29 am Kettenraddeckel der Motorkettensäge vorgesehen ist.

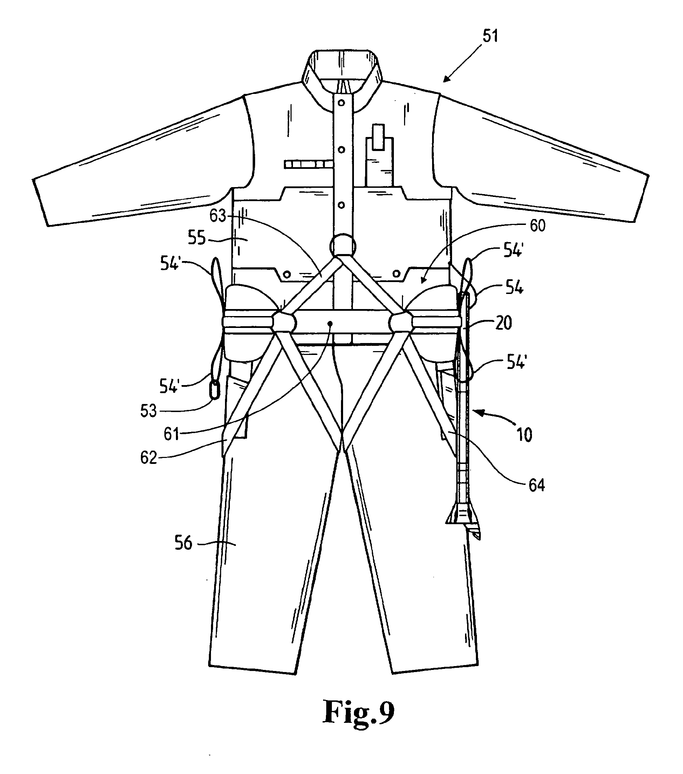

In Fig. 9 ist ein als Bekleidungsstück 51 für die Bedienungsperson der Motorkettensäge dienender Arbeitsanzug gezeigt, der aus einer Jacke 55 und einer Hose 56 besteht. An der Jacke 55 befindet sich eine Schlaufe 54, in der der Haken 20 des Kettenschutzes 10 eingehängt ist. Auf diese Weise dient das Bekleidungsstück 51 als Tragvorrichtung für den Kettenschutz 10.

Anstelle des Bekleidungsstückes 51 als Tragvorrichtung für den Kettenschutz 10 kann alternativ auch ein vom Benutzer angelegter Klettergurt 60 oder ein vom Benutzer angelegter Traggurt 61 vorgesehen sein. Der Klettergurt 60 bzw. der Traggurt 61 weist vorteilhaft ein oder mehrere Tragschlaufen 54' auf. Wie am Beispiel der Schlaufe 54 am Bekleidungsstück 51 gezeigt, ist der Kettenschutz 10 alternativ auch mit seinem Haken 20 an den Schlaufen 54' des Klettergurtes 60 bzw. eines Traggurtes 61 einzuhängen, so dass der Benutzer beide Hände für die Arbeit mit der Motorkettensäge im Baum frei hat.

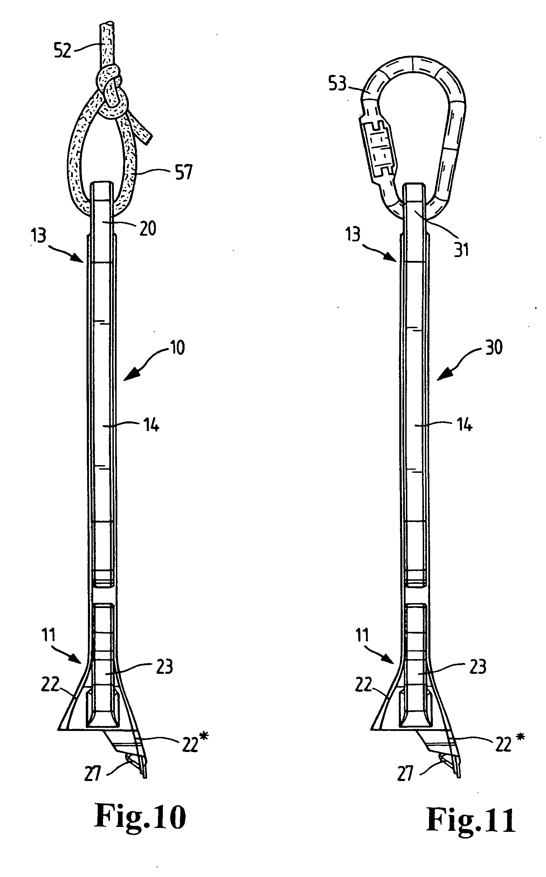

Ist der Haken 20 des Kettenschutzes 10 geschlossen, wie im Ausführungsbeispiel nach Fig. 7 gezeigt, kann zweckmäßig ein in der Tragschlaufe 54' gehaltener Karabiner 53 (Fig. 11) genutzt werden, in den der Haken 20 einzuklinken ist.

Der in Figur 9 gezeigte Klettergurt 60 besteht im Wesentlichen aus einem Traggurt 61, der auf der Hüfte des Benutzers getragen ist und zweckmäßig wie ein Gürtel geschlossen wird. Der Traggurt 61 wird durch Hinzufügen eine Brustgurtes 63 und Beingurten 62 und 64 zu einem Klettergurt 60, mit dem sich der Benutzer in seiner Arbeitsposition im Baum sichern kann. Die Tragschlaufen 54' sind bevorzugt am Traggurt 61 vorgesehen; es kann auch zweckmäßig sein, nicht nur den Traggurt 61, sondern zusätzlich oder auch alternativ den Brustgurt 63 oder die Beingurte 62 und 64 mit Tragschlaufen, Tragseilen (Fig. 10) oder Karabinern 53 (Fig. 11) zu versehen.

Die Fig. 10 zeigt ein als Tragvorrichtung für den Kettenschutz 10 dienendes Seil 52, das an einem Ende eine Schlaufe 57 aufweist, in die der Haken 20 des Kettenschutzes 10 eingehängt ist. Für das Einhängen des Kettenschutzes 30 mit einem geschlossenen Bügel 31 ist als Tragvorrichtung ein Karabiner 53 besonders geeignet, wie dies in Fig. 11 dargestellt ist. Im Übrigen stimmen für gleiche Teile die Bezugszeichen mit denjenigen der Fig. 3, 4, 6 und 7 überein.

## Patentansprüche

1. Kettenschutz für Motorkettensägen (1) und Tragvorrichtung für diesen, wobei der Kettenschutz (10, 30, 35) aus einem schmalen Gehäuse (9, 33, 36) mit zwei parallelen Seitenwänden (17, 37, 38), die über einen oberen Wandabschnitt (14, 47) und einem unteren Wandabschnitt (16, 48) miteinander verbunden sind, besteht und an einem vorderen Ende (13) geschlossen und an einem hinteren Ende (11) mit einer Öffnung (12) versehen ist,
**dadurch gekennzeichnet, dass** an dem Gehäuse (9, 33, 36) mindestens eine Vorrichtung zur Befestigung des Kettenschutzes (10, 30, 35) an einer Tragvorrichtung (51, 52, 53) vorgesehen ist, wobei diese Tragvorrichtung ein Bekleidungsstück (51) der Bedienungsperson der Motorkettensäge (1) oder ein Seil, ein Karabiner o. dgl. an dem Bekleidungsstück (51) ist oder die Tragvorrichtung ein von der Bedienungsperson der Motorkettensäge (1) angelegter Traggurt (61) ist oder die Tragvorrichtung ein von der Bedienungsperson der Motorkettensäge (1) angelegter Klettergurt (60) ist.

2. Kettenschutz nach Anspruch 1,
**dadurch gekennzeichnet, dass** die Vorrichtung mindestens einen Haken (20, 23) umfasst, wobei vorzugsweise an dem Haken (20, 23) ein Vorsprung (21, 24) angeformt ist.

3. Kettenschutz nach Anspruch 1,
**dadurch gekennzeichnet, dass** die Vorrichtung mindestens eine Öse oder geschlossenen Bügel (31, 32) umfasst.

4. Kettenschutz nach einem der Ansprüche 1 bis 3,
**dadurch gekennzeichnet, dass** das Gehäuse (9, 33, 36) und die Vorrichtung (20, 23, 31, 32) aus dem gleichen Kunststoffmaterial bestehen und die Vorrichtung (20, 23, 31, 32) einstückig mit dem Gehäuse (9, 33, 36) ausgeführt ist.

5. Kettenschutz nach Anspruch 4,
**dadurch gekennzeichnet, dass** der Kettenschutz (10, 30, 35) ein Blasformteil ist.

6. Kettenschutz nach einem der Ansprüche 1 bis 5,
**dadurch gekennzeichnet, dass** vor dem hinteren Ende (11) des Gehäuses (9) an den Seitenwänden (17) nach innen gerichtete Wölbungen (25) vorgesehen sind, die einen Klemmabschnitt bilden.

7. Kettenschutz nach einem der Ansprüche 1 bis 6,
**dadurch gekennzeichnet, dass** an den Seitenwänden (17) am hinteren Ende (11) des Gehäuses (9, 33) divergierende Wände (22, 22*) angeordnet sind, die eine trichterförmige Öffnung (12) bilden.

8. Kettenschutz nach einem der Ansprüche 1 bis 7,
**dadurch gekennzeichnet, dass** die Seitenwände (17) mindestens zwei Abschnitte (18, 18', 18") umfassen, die in verschiedenen Ebenen angeordnet sind und zwischen denen ein Absatz (19, 19') vorhanden ist, und durch die Abschnitte (18, 18', 18") der Abstand zwischen den Seitenwänden (17) unterschiedlich ist, wobei der Abstand am äußeren Umfang des Kettenschutzes (10, 30) größer ist als in der Mitte.

9. Kettenschutz nach einem der Ansprüche 1 bis 8,
**dadurch gekennzeichnet, dass** ein Vorsprung (27) oder Haken (50) zum formschlüssigen Eingriff an einem Kettenraddeckel (8) der Motorkettensäge (1) vorgesehen ist.

10. Kettenschutz nach Anspruch 1,
**dadurch gekennzeichnet, dass** die Vorrichtung eine Schlaufe oder ein Klettband (49) umfasst.

11. Verfahren zur Verwendung eines Kettenschutzes für Motorkettensägen (1), wobei der Kettenschutz (10, 30, 35) aus einem schmalen Gehäuse (9, 33, 36) mit zwei parallelen Seitenwänden (17, 37, 38), die über einen oberen Wandabschnitt (14, 47) und einem unteren Wandabschnitt (16, 48) miteinander verbunden sind, besteht und an einem vorderen Ende (13) geschlossen und an einem hinteren Ende (11) mit einer Öffnung (12) versehen ist,
**dadurch gekennzeichnet, dass** an dem Gehäuse (9, 33, 36) mindestens eine Vorrichtung zur Befestigung des Kettenschutzes (10, 30, 35) an einer Tragvorrichtung (S1, 52, 53) vorgesehen ist, und dass der Kettenschutz (35) in einem von der Motorkettensäge (1) getrennten Zustand an der Tragvorrichtung (51, 52, 53) gehalten ist,
, wobei diese Tragvorrichtung ein Bekleidungsstück (51) der Bedienungsperson der Motorkettensäge (1) oder ein Seil, ein Karabiner o. dgl. an dem Bekleidungsstück (51) ist oder die Tragvorrichtung ein von der Bedienungsperson der Motorkettensäge (1) angelegter Traggurt (61) ist oder die Tragvorrichtung ein von der Bedienungsperson der Motorkettensäge (1) angelegter Klettergurt (60) ist.

## Claims

1. Chain protector for motorised chain saws (1) and carrying device for the former, wherein the chain protector (10, 30, 35) comprises a narrow housing (9, 33, 36) with two parallel side walls (17, 37, 38) joined to each other by an upper wall section (14, 47) and a lower wall section (16, 48) and is closed at a front end (13) while having an opening (12) at a rear end (11),
**characterised in that** at least one device for securing the chain protector (10, 30, 35) to a carrying device (51, 52, 53) is provided on the housing (9, 33, 36), this carrying device being a garment (51) of the operator of the motorised chain saw (1) or a rope, a spring catch or the like on the garment (51), or the carrying device being a carrying harness (61) put on by the operator of the motorised chain saw (1), or the carrying device being a climbing harness (60) put on by the operator of the motorised chain saw (1).

2. Chain protector according to claim 1,
**characterised in that** the device comprises at least one hook (20, 23), an integral projection (21, 24) being preferably provided on the hook (20, 23).

3. Chain protector according to claim 1,
**characterised in that** the device comprises at least one eye or closed shackle (31, 32).

4. Chain protector according to any of claims 1 to 3,
**characterised in that** the housing (9, 33, 36) and the device (20, 23, 31, 32) are made of the same plastic material and the device (20, 23, 31, 32) is integrated with the housing (9, 33, 36).

5. Chain protector according to claim 4,
**characterised in that** the chain protector (10, 30, 35) is a blow moulding.

6. Chain protector according to any of claims 1 to 5,
**characterised in that** inwardly directed domes (25) are provided on the side walls (17) in front of the rear end (11) of the housing (9) to form a clamping section.

7. Chain protector according to any of claims 1 to 6,
**characterised in that** diverging walls (22, 22*) are provided at the rear end (11) of the housing (9, 33) to form a funnel-shaped opening (12).

8. Chain protector according to any of claims 1 to 7,
**characterised in that** the side walls (17) comprise at least two sections (18, 18', 18") which are arranged in different planes and between which a shoulder (19, 19') is provided, and **in that** the distance between the side walls (17) is made different by the sections (18, 18', 18"), the distance at the outer circumference of the chain protector (10, 30) being greater than in the middle.

9. Chain protector according to any of claims 1 to 8,
**characterised in that** a projection (27) or hook (50) is provided for the positive-locking engagement with a sprocket cover (8) of the motorised chain saw (1).

10. Chain protector according to claim 1,
**characterised in that** the device comprises a loop or a Velcro strip.

11. Method for using a chain protector for motorised chain saws (1), wherein the chain protector (10, 30, 35) comprises a narrow housing (9, 33, 36) with two parallel side walls (17, 37, 38) joined to each other by an upper wall section (14, 47) and a lower wall section (16, 48) and is closed at a front end (13) while having an opening (12) at a rear end (11),
**characterised in that** at least one device for securing the chain protector (10, 30, 35) to a carrying device (51, 52, 53) is provided on the housing (9, 33, 36), and **in that** the chain protector (35) is held on the carrying device (51, 52, 53) when separated from the motorised chain saw (1), this carrying device being a garment (51) of the operator of the motorised chain saw (1) or a rope, a spring catch or the like on the garment (51), or the carrying device being a carrying harness (61) put on by the operator of the motorised chain saw (1), or the carrying device being a climbing harness (60) put on by the operator of the motorised chain saw (1).

## Revendications

1. Protection de chaîne pour scies motorisées à chaîne (1) et dispositif de support pour celle-ci, étant précisé que la protection de chaîne (10, 30, 35) se compose d'un étroit boîtier (9, 33, 36) avec deux parois latérales parallèles (17, 37, 38) qui sont reliées entre elles par une partie de paroi supérieure (14, 47) et une partie de paroi inférieure (16, 48), et est fermée à une extrémité avant (13) et est pourvue, à une extrémité arrière (11), d'une ouverture (12),
**caractérisée en ce qu'**il est prévu sur le boîtier (9, 33, 36) au moins un dispositif pour fixer la protection de chaîne (10, 30, 35) à un dispositif de support (51, 52, 53), étant précisé que ce dispositif de support est constitué par un vêtement (51) de l'utilisateur de la scie à chaîne (1) ou par un câble, un mousqueton ou un élément similaire prévu sur le vêtement (51), ou que le dispositif de support est constitué par une sangle de suspension (61) portée par l'utilisateur de la scie à chaîne (1), ou que le dispositif de support est constitué par un baudrier (60) porté par l'utilisateur de la scie à chaîne (1).

2. Protection de chaîne selon la revendication 1,
**caractérisée en ce que** le dispositif comprend au moins un crochet (20, 23), étant précisé qu'une saillie (21, 24) est rapportée de préférence sur le crochet (20, 23).

3. Protection de chaîne selon la revendication 1,
**caractérisée en ce que** le dispositif comprend au moins un oeillet ou un étrier fermé (31,32).

4. Protection de chaîne selon l'une des revendications 1 à 3,
**caractérisée en ce que** le boîtier (9, 33, 36) et le dispositif (20, 23, 31, 32) se composent du même matériau en matière plastique, et le dispositif (20, 23, 31, 32) est réalisé d'une seule pièce avec le boîtier (9, 33, 36).

5. Protection de chaîne selon la revendication 4,
**caractérisée en ce que** la protection de chaîne (10, 30, 35) est constituée par une pièce formée par soufflage.

6. Protection de chaîne selon l'une des revendications 1 à 5,
**caractérisée en ce qu'**il est prévu devant l'extrémité arrière (11) du boîtier (9), sur les parois latérales (17), des parties bombées (25) dirigées vers l'intérieur qui forment une partie de serrage.

7. Protection de chaîne selon l'une des revendications 1 à 6,
**caractérisée en ce qu'**il est prévu sur les parois latérales (17), à l'extrémité arrière (11) du boîtier (9, 33), des parois divergentes (22, 22*) qui forment une ouverture en entonnoir (12).

8. Protection de chaîne selon l'une des revendications 1 à 7,
**caractérisée en ce que** les parois latérales (17) comprennent au moins deux parties (18, 18', 18") qui sont disposées dans des plans différents et entre lesquelles se trouve un décrochement (19, 19'), et grâce aux parties (18, 18', 18") la distance entre les parois latérales (17) est différente, étant précisé que sur la périphérie extérieure de la protection de chaîne (10, 30), cette distance est plus grande qu'au centre.

9. Protection de chaîne selon l'une des revendications 1 à 8,
**caractérisée en ce qu'**il est prévu une saillie (27) ou un crochet (50) pour venir en prise par complémentarité de forme avec un couvercle de roue à chaîne (8) de la scie à chaîne (1).

10. Protection de chaîne selon la revendication 1,
**caractérisée en ce que** le dispositif comprend une boucle ou une bande autoagrippante (49).

11. Procédé pour l'utilisation d'une protection de chaîne pour scies motorisées à chaîne (1), étant précisé que la protection de chaîne (10, 30, 35) se compose d'un étroit boîtier (9, 33, 36) avec deux parois latérales parallèles (17, 37, 38) qui sont reliées entre elles par une partie de paroi supérieure (14, 47) et une partie de paroi inférieure (16, 48), et est fermée à une extrémité avant (13) et est pourvue, à une extrémité arrière (11), d'une ouverture (12),
**caractérisé en ce qu'**il est prévu sur le boîtier (9, 33, 36) au moins un dispositif pour fixer la protection de chaîne (10, 30, 35) à un dispositif de support (51, 52, 53), et **en ce que** la protection de chaîne (35) est maintenue sur le dispositif de support (51, 52, 53) dans un état séparé de la scie à chaîne (1), étant précisé que ce dispositif de support est constitué par un vêtement (51) de l'utilisateur de la scie à chaîne (1) ou par un câble, un mousqueton ou un élément similaire prévu sur le vêtement (51), ou que le dispositif de support est constitué par une sangle de suspension (61) portée par l'utilisateur de la scie à chaîne (1), ou que le dispositif de support est constitué par un baudrier (60) porté par l'utilisateur de la scie à chaîne (1).
